# EUROPÄISCHE PATENTSCHRIFT

(11) **EP 0 762 925 B1**
(45) Veröffentlichungstag und Bekanntmachung des Hinweises auf die Patenterteilung: **11.08.1999**
(21) Anmeldenummer: 95916580.4
(22) Anmeldetag: 03.05.1995
(51) Int. Cl.: B01D 53/86, B01J 23/28, B01J 23/22, B01J 21/06

(54) **KATALYSATOR ZUR STICKOXIDMINDERUNG IN EINEM STRÖMUNGSMEDIUM UND VERFAHREN ZU SEINER HERSTELLUNG**
DeNOx CATALYST FOR REDUCING THE NOx CONCENTRATION IN A STREAM OF FLUID, AND METHOD OF MANUFACTURING THE CATALYST
CATALYSEUR POUR LA REDUCTION DE LA CONCENTRATION EN OXYDES D'AZOTE DANS UN FLUIDE EN CIRCULATION, ET SON PROCEDE DE FABRICATION

(30) Priorität: 30.05.1994 DE 4418869
(43) Veröffentlichungstag der Anmeldung: 19.03.1997
(73) Patentinhaber: SIEMENS AKTIENGESELLSCHAFT, 80333 München (DE)
(72) Erfinder: HUMS, Erich, D-91093 Hessdorf (DE); SPITZNAGEL, Günther, D-91058 (DE); HÜTTENHOFER, Klaus, D-90562 Heroldsberg (DE); FISCHER, Peter, D-95361 Ködnitz-Kauerndorf (DE); NEUFERT, Ronald, D-96247 Michelau (DE)
(86) Internationale Anmeldenummer: DE9500584
(87) Internationale Veröffentlichungsnummer: WO9532789

(56) Entgegenhaltungen:
- EP-A- 0 313 755
- EP-A- 0 360 548
- WO-A-94/26410
- DE-A- 2 846 476
- DE-A- 3 531 810
- DE-A- 3 805 564
- DE-A- 4 315 062
- US-A- 4 085 193

## Beschreibung

Die Erfindung bezieht sich auf einen Katalysator zur Stickoxidminderung in einem Strömungsmedium, wie z. B. einem Abgas oder einem Rauchgas einer Verbrennungsanlage, und auf ein Verfahren zur Herstellung eines solchen Katalysators.

Aufgrund der erwiesenermaßen umweltschädlichen Wirkung von Stickoxiden im Abgas einer Verbrennungsanlage hat sich eine Technologie mit dem Ziel etabliert, die Stickoxide katalytisch abzubauen. Durchgesetzt hat sich dabei das sogenannte Verfahren der selektiven katalytischen Reduktion (SCR-Verfahren), bei dem die Stickoxide zusammen mit einem geeigneten Reduktionsmittel, meist Ammoniak NH₃, mit einem sogenannten DeNOₓ-Katalysator kontaktiert und zu umweltunbedenklichem Stickstoff und Wasser katalytisch umgesetzt werden.

In der DE-A-24 58 888 (= US-A-4,085,193) sind unter anderem auch DeNOₓ-Katalysatoren offenbart, die neben Titan als Hauptbestandteil Vanadium und Molybdän oder Wolfram enthalten. Es hat sich gezeigt, daß ein molybdänhaltiger Katalysator nicht die katalytische Aktivität eines wolframhaltigen Katalysators erreicht. Dieser Aktivitätsnachteil kann derzeit nur durch ein größeres Katalysatorvolumen des molybdänhaltigen Katalysators ausgeglichen werden.

Desweiteren hat sich erwiesen, daß die in der DE-A-24 58 888 als besonders wesentlich herausgestellte "innige Mischung" der Komponenten des Katalysators dazu führt, daß der Katalysator relativ schnell durch flüchtige Schwermetalle und Schwermetallverbindungen vergiftet wird, die im zu entstickenden Abgas enthalten sind. Durch die "innige Mischung" scheidet chemisch stabilisiertes und/oder vorkalziniertes Titandioxid TiO₂ per Definition als Ausgangsstoff für Katalysatoren aus, weil hiermit gemäß der US-PS 4,085,193 keine ausreichende katalytische Aktivität erreicht werden kann (US-A-4,085,193, Spalte 3, Zeilen 59ff). Der Anteil an MoO₃ liegt jeweils über 5 Gew.-%.

Durch die US-A-4,952,548 wird ein Katalysator zur Stickoxidminderung offenbart, der als erste Komponente Titanoxid, als zweite Komponente Molybdänoxid MoO₃ und/oder Wolframoxid WO₃ und als dritte Komponente Vanadiumoxid und/oder -sulfat enthält. Für den Gehalt der zweiten Komponente ist als untere Grenze 3 Atom.-% angegeben. Bei einem Molgewicht von 144 g für MoO₃ und von 80 g für TiO₂ ergibt sich für Beispiel 4 gemäß Tabelle 2 ein geringster Anteil an MoO₃ von etwa 5,25 Gew.-%. Derzeit hat sich für den Molybdän-Gehalt eines solchen Katalysators ein Gehalt von etwa 10 bis 12 Gew.-%, gerechnet in MoO₃, als am günstigsten erwiesen. Es hat sich gezeigt, daß die katalytische Aktivität eines Titan-Molybdän-Vanadium-Katalysators mit den in der US-PS 4,952,548 angegebenen Atomverhältnissen nach wie vor unterhalb der katalytischen Aktivität eines handelsüblichen Titan-Wolfram-Vanadium-Katalysators liegt.

Aus der DE-A-35 31 810 ist ein Katalysatormaterial zur Reduktion von Stickoxiden bekannt, welches durch einen mahlaktiven Schritt aus Titanoxid in calcinierter Anatas-Modifikation unter Beimischen von Vanadiumoxid und eventuell Molybdänoxid hergestellt ist. Bei einer teilweisen Substitution durch Phosphor liegt die Summe der aktiven Komponenten Vanadiumoxid und Molybdänoxid in einer Menge von weniger als 1 Atom-% bezogen auf Titan vor. Die katalytische Aktivität wird dabei nicht bloß durch Mischen der Substanzen, sondern durch einen Mahlprozeß erzielt, bei dem eine katalytisch wirksame Verbindung entsteht, welche sich von der reinen Mischung unterscheidet.

Ebenso ist aus der EP-A-0 313 755 ein molybdän- und vanadiumhaltiger Katalysator auf Titanoxid-Basis zur Entfernung von Stickoxiden bekannt. Der im Katalysator durch eine Imprägnierung mit einer gelösten Molybdän- und Vandiumverbindung erhaltene Gehalt an Molybdän und Vanadium, berechnet als MoO₃ und V₂O₅, beträgt 5 - 15 Gew.-% bzw. 0,1 bis 3,0 Gew.-%. Vorzugsweise wird Metatitansäure aus dem Sulfatprozeß als Ausgangsmaterial verwendet.

Zur Herstellung derartiger Ti/Mo/V-Katalysatoren ist ferner aus der EP-A-0 360 548 bekannt, Ammoniummolybdat und Ammoniummetavanadat mit Metatitansäure in Wasser zu einer knetbaren Masse zu vermischen, diese Masse zu granulieren, zu trocknen, bei 550°C zu calcinieren und zu Pulver zu zermahlen. Das so erhaltene Pulver wird mit Waser zu einer Aufschlämmung verarbeitet, in welche ein Metallträger zum Zwecke der Beschichtung eingetaucht wird. Abschließend erfolgt eine erneute Calcinierung bei 500°C. Bevorzugt enthält der Ti/Mo/V-Katalysator 5-15 Mol% Mo. gemäß Beispeil 2 ist der niedrigste Mo gehalt 5,04%.

Hierzu ist des Weiteren in der DE-A-28 46 476 beschrieben, für die Herstellung eines Titandioxid-haltigen Sinterprodukts zur katalytischen Entfernung von Schadstoffen direkt Titandioxid mit Ammoniumvanadat und Ammoniummolybdat zu einer wäßrigen Aufschlämmung zu mischen und zu kneten. Die entstandene Mischung wird getrocknet, pulverisiert und vorcalciniert, wobei das Vorcalcinieren dem Abscheiden von Molybdänoxid auf dem pulverförmigen Titandioxid dient, um eine gute Wirksamkeit zu erzielen. Anschließend wird das vorcalcinierte Material wiederum mit Wasser versetzt und zu einer viskosen Masse geknetet. Diese Masse wird zu gewünschten Strukturen geformt und abschließend calciniert. Gemäß Tabelle 2 weist die fertige Masse bei einem geringsten Anteil an MoO₃ von 5 Gew.-% einen Anteil an V₂O₅ von mehr als 6 Gew.-% auf.

Der Erfindung liegt die Aufgabe zugrunde, einen Katalysator zur Stickoxidminderung in einem Strömungsmedium anzugeben, der Titan, Molybdän und Vanadium enthält und dessen katalytische Aktivität die katalytische Aktivität eines vergleichbaren wolframhaltigen Katalysators erreicht. Weiter liegt der Erfindung die Aufgabe zugrunde, ein Verfahren zur Herstellung eines solchen Katalysators anzugeben.

Bezüglich des Katalysators wird diese Aufgabe erfindungsgemäß gelöst durch einen Katalysator zur Stickoxidminderung in einem Strömungsmedium mit einer Katalysatormasse, die Titan, Molybdän und Vanadium in Form ihrer Oxide enthält, wobei der Anteil an Molybdäntrioxid MoO₃ etwa 0,01 bis weniger als 5 Gew.-%, vorzugsweise etwa 1,5 bis 4 Gew.-% und der Anteil an Vanadiumpentoxid V₂O₅ etwa 0,01 bis 5 Gew.-%, vorzugsweise 0,5 bis 2,0 Gew.-%, bezogen auf das Gewicht der Katalysatormasse, beträgt, und wobei Titan in Form von stabilisiertem Titandioxid TiO₂ vom Anatas-Typ enthalten ist.

Bezüglich des Verfahrens wird diese Aufgabe erfindungsgemäß dadurch gelöst, daß chemisch stabilisiertes Titandioxid vom Anatas-Typ mit einem Dispergiermittel, wie z. B. Wasser, zu einer knetbaren Masse ergänzt wird, dieser Masse wasserlösliche Verbindungen von Molybdän und Vanadium sowie gegebenenfalls weitere Hilfsstoffe zugefügt werden, wobei die Masse zu einer Katalysatormasse weiter verknetet wird, anschließend Tragkörper mit der Katalysatormasse beschichtet oder Wabenkörper aus der Katalysatormasse extrudiert werden oder die Katalysatormasse zu Granulatkörnern granuliert oder zu Pellets pelletiert wird, daran anschließend die beschichteten Tragkörper bzw. die Wabenkörper bzw. die Granulatkörner bzw. die Pellets getrocknet und bei einer Temperatur von 400 bis 700 °C, vorzugsweise 500 bis 600 °C, über einige Stunden, vorzugsweise 2 bis 4 Stunden, kalziniert werden.

Der auf diese Weise bereitgestellte molybdänhaltige Katalysator zur Stickoxidminderung weist eine besonders hohe katalytische Aktivität auf. Diese Wirkung wird in überraschender Weise unter anderem dadurch erzielt, daß der Molybdängehalt besonders gering ist. Es hat sich weiter in überraschender Weise gezeigt, daß ein erfindungsgemäßer Katalysator mit derselben katalytischen Aktivität wie ein wolframhaltiger Katalysator zusätzlich erheblich vergiftungsresistenter gegenüber Arsenoxid ist und damit besonders bevorzugt in Kraftwerksanlagen hinter Schmelzkammerfeuerungen eingesetzt werden kann. Unter chemisch stabilisiertem Titandioxid wird dabei solches Titandioxid verstanden, welches in einer Röntgendiffraktometrie-Untersuchung die für das Titandioxidgitter spezifischen Röntgenreflexe zeigt. Solches stabilisiertes Titandioxid wird beispielsweise als Endprodukt aus dem Sulfat-Verfahren erhalten.

Mit Bezug auf die Oberflächenstruktur eines im wesentlichen auf der Basis von Titanoxid aufgebauten Katalysators ist es vorteilhaft, wenn der Anteil an Titanoxid des Rutil-Typs kleiner als 5 Gew.-%, vorzugsweise kleiner als 1 Gew.-%, bezogen auf die Gesamtmenge von Titandioxid TiO₂, ist. Mit Titandioxid vom Anatas-Typ wird eine hohe spezifische Oberfläche und eine hohe Aktivität in einfacher Weise erreicht, wohingegen Titandioxid des Rutil-Typs aufgrund des unterschiedlichen Kristallgitters eine geringere spezifische Oberfläche aufweist.

Der Katalysator kann eine oder mehrere der nachfolgend genannten Eigenschaften besitzen, die den Katalysator besonders vergiftungsresistent in Bezug auf Arsen und Arsen-Sauerstoff-Verbindungen machen. Es kann vorgesehen sein, die Verunreinigungen des Titandioxids für Natrium Na, Kalium K und Eisen Fe jeweils kleiner als 500 ppm, vorzugsweise kleiner als 100 ppm, zu wählen. Außerdem kann der Anteil an Phosphor P im Titandioxid TiO₂ kleiner 0,5 Gew.-%, vorzugsweise kleiner 0,2 Gew.-%, betragen. Außerdem kann der Anteil von Schwefel, gerechnet als Sulfat SO₄, im Titandioxid TiO₂ zwischen 0 und 3 Gew.-%, vorzugsweise etwa 1 bis 2 Gew.-%, liegen.

Eine für die katalytische Umsetzung der Stickoxide vorteilhafte Oberflächenstruktur ergibt sich, wenn die spezifische Oberfläche des Titandioxids TiO₂ zwischen 40 und 180 m²/g, vorzugsweise zwischen 70 und 130 m²/g, beträgt.

Ausführungsbeispiele der Erfindung werden anhand der Zeichnung näher erläutert. Dabei zeigen:
- Figur 1: die katalytische Aktivität k einer Katalysatormasse in Abhängigkeit vom Molybdäntrioxidgehalt für verschiedene Vanadiumpentoxid-Gehalte;
- Figur 2: eine schematische Darstellung einer Verbrennungsanlage mit einer Ascherezirkulationsleitung; und
- Figur 3: das Flußdiagramm eines Herstellungsprozesses für einen Katalysator.

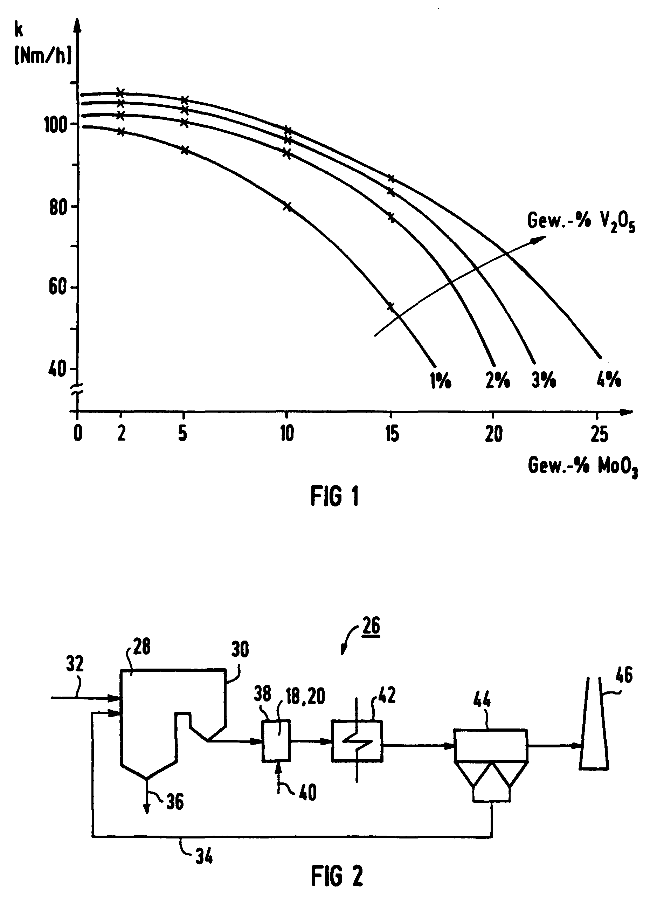

In Figur 1 ist die katalytische Aktivität k, angegeben in Nm/h (Normmeter pro Stunde), der Katalysatormasse in Abhängigkeit vom Molybdäntrioxidgehalt, angegeben in Gew.-% MoO₃, für verschiedene Gehalte an Vanadiumpentoxid V₂O₅ dargestellt. Man erkennt, daß ein Maximum an katalytischer Aktivität bereits bei einem Molybdäntrioxidgehalt von etwa 2 Gew.-%, bezogen auf das Gewicht der Katalysatormasse, erreicht wird. Die katalytische Aktivität der Katalysatormasse wird dabei weniger von dem Gehalt an Vanadiumpentoxid bestimmt, der gemäß der dargestellten Kurven 1, 2, 3 und 4 Gew.-% beträgt, sondern eher durch den vergleichsweise geringen Gehalt an Molybdäntrioxid MoO₃.

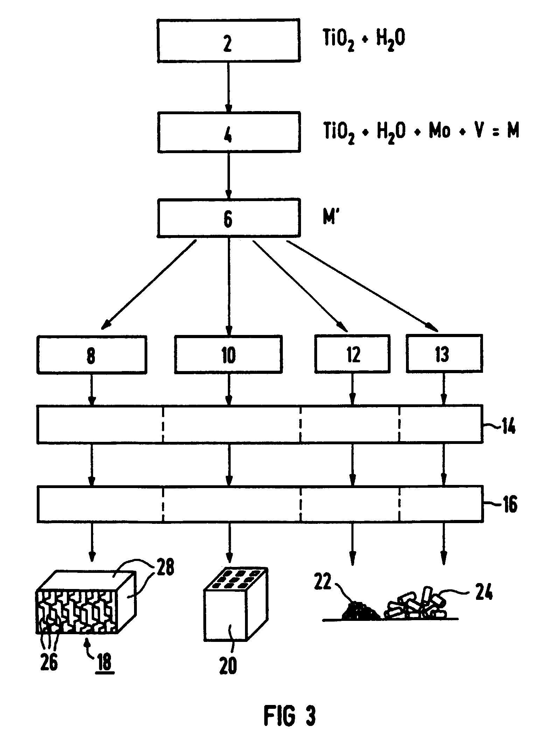

Die Katalysatoren zur Stickoxidminderung, die zur Messung der in Figur 1 dargestellten Daten herangezogen worden sind, wurden im wesentlichen gemäß Figur 3 hergestellt:

Als Ausgangsprodukt für einen Verfanrensschritt 2 wird chemisch stabilisiertes Titandioxid vom Anatas-Typ gewählt, wobei der Rutilanteil kleiner 5 Gew.-%, vorzugsweise kleiner 1 Gew.-%, ist. Ferner liegt der Anteil an den Verunreinigungen Natrium, vorliegend als Dinatriumoxid Na₂O, Kalium, vorliegend als Dikaliumoxid K₂O, und Eisen Fe jeweils bei etwa oxid beträgt etwa 0,2 Gew.-% oder weniger. Der Anteil von Schwefel, vorliegend als Sulfat SO₄, beträgt zwischen 0 und 3 Gew.-%, vorzugsweise etwa 1 bis 2 Gew.-%.

Das Titandioxid wird während des Verfahrensschrittes 2 mit Wasser zu einer knetbaren Masse ergänzt, die wiederum in einem Verfahrensschritt 4 in Abhängigkeit von den beabsichtigten Konzentrationen mit wasserlöslichen Verbindungen von Molybdän und Vanadium, wie z. B. Ammoniumheptamolybdat und Ammoniummetavanadat, zu einer Masse M ergänzt wird. Diese Masse M wird geknetet.

Nach Einstellung eines gewünschten Wassergehaltes der Masse M werden dieser Masse M zur Erhöhung der mechanischen Festigkeit anorganische Mineralien, wie z. B. Tone, und/oder Fasermaterial, wie z. B. Glasfasern, in einem Verfahrensschritt 6 zugefügt. Desweiteren können der Knetmasse im selben Verfahrensschritt 6 weitere Zuschlagstoffe, wie z. B. Filmbildehilfsmittel, Dispergierhilfsmittel, Verdickungsmittel und ähnliches, zugefügt werden. Die so erhaltene Masse wird zu einer Katalysatormasse M' weiter verknetet.

In den Verfahrensschritten 8, 10, 12 und 13 wird diese Katalysatormasse M' auf einen Tragkörper, wie z. B. Streckmetall, aufgewalzt, bzw. zu einem Wabenkörper 20 extrudiert bzw. zu Granulat 22 oder Pellets 24 geformt

Nach Abschluß der Formgebung der Katalysatormasse M' werden alle Ausführungsformen (Platte, Wabe, Granulat, Pellets) in einem allen Ausführungsformen gemeinsamen Verfahrensschritt 14 getrocknet und anschließend in einem allen Ausführungsformen gemeinsamen Verfahrensschritt 16 bei einer Temperatur von etwa 500 °C über eine Dauer von mehreren Stunden (ca 2 bis 4 Stunden) kalziniert. Infolge dieser relativ niedrigen Kalziniertemperatur wird das Porenwachstum gehemmt, so daß sich eine Struktur der Katalysatormasse mit vergleichsweise hoher spezifischer Oberfläche ausbildet.

Die beschichteten Tragkörper 26 werden in einen Elementkasten 28 eingebaut, z. B. eingesteckt, wodurch ein Plattenkatalysator 18 gebildet wird.

Alternativ zu metallischen Tragkörpern und zum Aufwalzen der Katalysatormasse M' wäre es auch möglich, inerte Tragkörper, wie z. B. Aluminiumoxid, Zirkonoxid, Cordierit oder ähnliches, mit einer in Wasser suspendierten Katalysatormasse, bestehend aus Wasser, Titandioxid, Ammoniumheptmolybdat und Ammoniummetavanadat, zu imprägnieren. Die Ammoniumverbindungen des Molybdäns und des Vanadiums wandeln sich beim Calzinieren in oxidische Verbindungen, wie z. B. MoO₃ und V₂O₅, um.

In der in Figur 2 gezeigten schematischen Darstellung einer Verbrennungsanlage 26 erkennt man einen Feuerungskessel 28 mit nachgeschaltetem Dampferzeuger 30. An den Kessel 28 sind eingangsseitig eine Kohlezuführungsleitung 32 und eine Ascherückführungsleitung 34 angeschlossen. Ausgangsseitig erkennt man eine Schlackeabzugsleitung 36. Das im Kessel 28 bei der Verbrennung der Kohle gebildete Rauchgas gibt den größten Teil seiner thermischen Energie im Dampferzeuger 30 an ein hier nicht weiter dargestelltes Wärmetransportmedium, wie z. B. Wasser, ab und strömt nachfolgend in einen DeNOₓ-Reaktor 10. In diesem DeNOₓ-Reaktor 38 befinden sich Platten- und/oder Wabenkatalysatoren 18 bzw. 20 mit der vorstehend beschriebenen Katalysatormasse. Bevor das Rauchgas mit den Waben- oder Plattenkatalysatoren 20 bzw. 18 kontaktiert wird, wird diesem das zur selektiven Reduktion der im Rauchgas enthaltenen Stickoxide benötigte Reduktionsmittel, hier Ammoniak, über eine Ammoniakzuführungsleitung 40 zugeführt. Durch die Kontaktierung der Stickoxide und des Ammoniaks am Katalysator werden diese beiden Edukte katalytisch zu Stickstoff und Wasser umgesetzt. Im Anschluß an den DeNOₓ-Reaktor 10 durchströmt das nun weitgehend stickoxidfreie Rauchgas einen Luftvorwärmer 42, eine Filteranlage 44 und einen Kamin 46. Der in der Filteranlage 44 aus dem Rauchgas abgeschiedene Staub wird über die Ascherezirkulationsleitung 34 in den Kessel 28 zurückgeführt.

In Folge der hier vorgesehenen Ascherezirkulation und der Verwendung von Kohle als Brennstoff weist das bei der Verbrennung entstehende Rauchgas auch einen nicht vernachlässigbaren Anteil an flüchtigen Schwermetallverbindungen auf. In der Hauptsache sind dies Sauerstoffverbindungen von Blei, Selen, Arsen, Cadmium und Zink. Diese Verbindungen schlagen sich auch auf den katalytisch aktiven Oberflächen der Katalysatoren 18, 20 im DeNOₓ-Reaktor 38 nieder und können dort die Katalysatormasse vergiften und damit desaktivieren. Aufgrund der vorstehend genannten Eigenschaften der Katalysatormasse wird im vorliegenden Fall eine besonders langsame Desaktivierung und Vergiftung der Katalysatoren 18, 20 in dem DeNOₓ-Reaktor 38 erreicht.

## Patentansprüche

1. Katalysator (18, 20, 22, 24) zur Stickoxidminderung in einem Strömungsmedium mit einer Katalysatormasse (M'), die Titan, Molybdän und Vanadium in Form ihrer Oxide enthält,
**dadurch gekennzeichnet**, daß der Anteil an Molybdäntrioxid MoO₃ 0,01 bis weniger als 5 Gew.-%, vorzugsweise 1,5 bis 4 Gew.-%, und der Anteil an Vanadiumpentoxid V₂O₅ 0,01 bis 5 Gew.-%, vorzugsweise 0,5 bis 2,0 Gew.-%, bezogen auf das Gewicht der Katalysatormasse (M'), beträgt und wobei Titan in Form von chemisch stabilisiertem Titandioxid TiO₂ vom Anatas-Typ enthalten ist.

2. Katalysator (18, 20, 22, 24) nach Anspruch 1,
**dadurch gekennzeichnet**, daß der Anteil an Titandioxid TiO₂ vom Rutil-Typ kleiner 5 Gew.-%, vorzugsweise kleiner 1 Gew.-%, bezogen auf die Gesamtmenge von Titandioxid TiO₂, ist.

3. Katalysator (18, 20, 22, 24) nach einem der Ansprüche 1 bis 2,
**dadurch gekennzeichnet**, daß die Verunreinigungen des Titandioxids an Natrium Na, Kalium K und Eisen Fe jeweils kleiner 500 ppm, vorzugsweise kleiner 100 ppm, sind.

4. Katalysator (18, 20, 22, 24) nach einem der Ansprüche 1 bis 3,
**dadurch gekennzeichnet**, daß der Anteil an Phosphor P im Titandioxid TiO₂ kleiner 0,5 Gew.-%, vorzugsweise kleiner 0,2 Gew.-%, ist.

5. Katalysator (18, 20, 22, 24) nach einem der Ansprüche 1 bis 4,
**dadurch gekennzeichnet**, daß der Anteil an Schwefel, gerechnet als Sulfat SO₄, am Titandioxid TiO₂ zwischen 0 und 3 Gew.-%, vorzugsweise zwischen 1 bis 2 Gew.-%, liegt.

6. Katalysator (18, 20, 22, 24) nach einem der Ansprüche 1 bis 5,
**dadurch gekennzeichnet**, daß die spezifische Oberfläche des Titandioxids TiO₂ zwischen 40 und 180 m²/g, vorzugsweise zwischen 70 und 130 m²/g, beträgt.

7. Verfahren zur Herstellung eines Katalysators nach einem der Ansprüche 1 bis 6,
**dadurch gekennzeichnet**, daß
a)chemisch stabilisiertes Titandioxid TiO₂ vom Anatas-Typ mit einem Dispergiermittel, wie z. B. Wasser, zu einer knetbaren Masse ergänzt wird,
b)dieser Masse wasserlösliche Verbindungen von Molybdän und Vanadium sowie gegebenenfalls weitere Hilfsstoffe zugefügt werden, wobei die Masse zu einer Katalysatormasse (M') weiter verknetet wird,
c)anschließend Tragkörper mit der Katalysatormasse (M') beschichtet oder Wabenkörper aus der Katalysatormasse extrudiert werden oder die Katalysatormasse zu Granulatkörnern granuliert oder zu Pellets pelletiert wird, und
d)die beschichteten Tragkörper bzw. die Wabenkörper bzw. die Granulatkörner bzw. die Pellets getrocknet und bei einer Temperatur von 400 bis 700 °C, vorzugsweise 500 bis 600 °C, über einige Stunden, vorzugsweise 2 bis 4 Stunden, calciniert werden.

## Claims

1. Catalyst (18, 20, 22, 24) for lowering the concentration of nitrogen oxides in a flowing medium using a catalyst composition (C') containing titanium, molybdenum and vanadium in the form of their oxides, characterized in that the proportion of molybdenum trioxide MoO₃ is from 0.01 to less than 5% by weight, preferably from 1.5 to 4% by weight and the proportion of vanadium pentoxide V₂O₅ is from 0.01 to 5% by weight, preferably from 0.5 to 2.0% by weight, based on the weight of the catalyst composition (C'), and titanium is present in the form of chemically stabilized titanium dioxide TiO₂ of the anatase type.

2. Catalyst (18, 20, 22, 24) according to Claim 1, characterized in that the proportion of titanium oxide TiO₂ of the rutile type is less than 5% by weight, preferably less than 1% by weight, based on the total amount of titanium dioxide TiO₂.

3. Catalyst (18, 20, 22, 24) according to either of Claims 1 and 2, characterized in that the sodium Na, potassium K and iron Fe impurities in the titanium dioxide are each less than 500 ppm, preferably less than 100 ppm.

4. Catalyst (18, 20, 22, 24) according to any one of Claims 1 to 3, characterized in that the proportion of phosphorus P in the titanium dioxide TiO₂ is less than 0.5% by weight, preferably less than 0.2% by weight.

5. Catalyst (18, 20, 22, 24) according to any one of Claims 1 to 4, characterized in that the proportion of sulphur, calculated as sulphate SO₄, in the titanium dioxide TiO₂ is between 0 and 3% by weight, preferably between 1 and 2% by weight.

6. Catalyst (18, 20, 22, 24) according to any one of Claims 1 to 5, characterized in that the specific surface area of the titanium dioxide TiO₂ is between 40 and 180 m²/g, preferably between 70 and 130 m²/g.

7. Process for producing a catalyst according to any one of Claims 1 to 6, characterized in that
a) chemically stabilized titanium dioxide TiO₂ of the anatase type is made up with a dispersion medium, for example water, to give a kneadable composition,
b) water-soluble compounds of molybdenum and vanadium and also, if desired, further auxiliaries are added to this composition, with the composition being further kneaded to give a catalyst composition (C'),
c) support bodies are subsequently coated with the catalyst composition (C') or honeycomb bodies are extruded from the catalyst composition or the catalyst composition is granulated to give granules or pelletized to give pellets, and
d) the coated support bodies or the honeycomb bodies or the granules or the pellets are dried and calcined at a temperature of from 400 to 700°C, preferably from 500 to 600°C, for a number of hours, preferably from 2 to 4 hours.

## Revendications

1. Catalyseur (18, 20, 22, 24) pour diminuer la teneur en oxyde d'azote d'un fluide en écoulement par une composition (M') de catalyseur, qui renferme du titane, du molybdène et du vanadium sous la forme de leurs oxydes, caractérisé en ce que la proportion de trioxyde de molybdène MoO₃ représente de 0,01 à 5% et, de préférence, de 1, 5 à 4 % et la proportion de pentoxyde de vanadium V₂O₅ de 0,01 à 5 % et, de préférence, de 0,5 à 2,0 % du poids de la composition (M') de catalyseur, le titane étant sous la forme de dioxyde de titane TiO₂ stabilisé chimiquement de type anatase.

2. Catalyseur (18, 20, 22, 24) suivant la revendication 1,
caractérisé en ce que la proportion de dioxyde de titane TiO₂ de type rutile représente moins de 5% et, de préférence, moins de 1% du poids total du dioxyde de titane TiO₂.

3. Catalyseur (18, 20, 22, 24) suivant l'une des revendications 1 à 2,
caractérisé en ce que les impuretés du dioxyde de titane en sodium Na, potassium K et fer Fe représentent chacune moins de 500 parties par million et, de préférence, moins de 100 parties par million.

4. Catalyseur (18, 20, 22, 24) suivant l'une des revendications 1 à 3,
caractérisé en ce que la proportion de phosphore P du dioxyde de titane TiO₂ est inférieure à 0,5 % en poids et, de préférence, inférieure à 0,2 % en poids.

5. Catalyseur (18, 20, 22, 24) suivant l'une des revendications 1 à 4,
caractérisé en ce que la proportion de soufre, exprimée en sulfate SO₄, du dioxyde de titane TiO₂ est comprise entre 0 et 3 % en poids et, de préférence, entre 1 et 2 % en poids.

6. Catalyseur (18, 20, 22, 24) suivant l'une des revendications 1 à 5,
caractérisé en ce que la surface spécifique du dioxyde de titane TiO₂ est comprise entre 40 et 180 m²/g et, de préférence, entre 70 et 130 m²/g.

7. Procédé de préparation d'un catalyseur suivant l'une des revendications 1 à 6,
caractérisé en ce qu'il consiste
a) à compléter du dioxyde de titane TiO₂ stabilisé chimiquement de type anatase par un agent de dispersion, par exemple de l'eau, pour obtenir une composition pouvant être malaxée,
b) à ajouter à cette composition des composés hydrosolubles de molybdène et de vanadium ainsi que, le cas échéant, d'autres adjuvants, la composition étant malaxée davantage en une composition (M') de catalyseur,
c) à revêtir ensuite des corps supports de la composition (M') de catalyseur ou à extruder des corps en nids d'abeilles en la composition de catalyseur ou à granuler la composition de catalyseur en grains ou à la pastiller en pastilles, et
d) à sécher les corps supports revêtus ou les corps en nids d'abeilles ou les grains ou les pastilles et à les calciner à une température de 400 à 700°C, de préférence, de 500 à 600°C pendant quelques heures, de préférence pendant 2 à 4 heures.
